# EUROPEAN PATENT APPLICATION

(11) **EP 4 403 319 A1**
(43) Date of publication of application: **24.07.2024**
(21) Application number: 24152588.0
(22) Date of filing: 18.01.2024
(51) Int. Cl.: B25J 9/16

(54) **AUTONOMOUS LOCALIZATION USING LIGHT FILTERING THROUGH TRANSIENT SYNCHRONOUS ILLUMINATION AND PERCEPTION**

(30) Priority: 18.01.2023 US 202318155807
(71) Applicant: ABB E-mobility B.V., 2629 JG Delft (NL)
(72) Inventor: HETRICH, Matthew, Cary, 27519 (US)
(74) Representative: Zimmermann & Partner Patentanwälte mbB

(57) **Abstract**

An apparatus for directing a connection element is provided. The apparatus includes a robotic element for manipulating the connection element and a computer vision system communicatively coupled to the robotic element. The computer vision system includes one or more processors configured to: receive a first frame representing an environment at a first time, the environment at the first time comprising marker light of a first mode and other light; receive a second frame of the environment at a second time, the environment at the second time comprising marker light of a second mode and the other light; compare the first frame to the second frame to determine a difference in lighting in the environment between the first time and the second time; and differentiate the marker light of the first mode and the marker light of the second mode from the other light based on the determined difference.

## Description

### FIELD

The present disclosure is directed to the field of autonomous localization and autonomous electric vehicle (EV) charging.

### BACKGROUND

Electric vehicles (EVs) use one or more electric motors for propulsion. These electric motors may be powered by on-board batteries, which must be charged. There exist a variety of options for charging the EV's batteries, one of which is charging using a pluggable receptacle of the EV connected to an external power supply, e.g., grid power. EVs may be manually connected to the external power supply, such as by a human operator plugging in a connector from a charging station to the charging receptacle of the EV. EVs may also be charged autonomously. For example, autonomous charging devices may be used to locate the charging receptacle on the EV, and plug in the connector from the charging station to provide hands-free, autonomous charging. Autonomous charging can be performed using mobile robots or robotic arms capable of interacting with the EV charging equipment and EVs. Such mobile robots or robotic arms may be controlled/positioned with the aid of a vison or perception system allowing for the autonomous localization of the charging connector at a charging receptacle of the EV.

### SUMMARY

The inventors of the present disclosure have recognized that a vision or perception system for autonomous localization is susceptible to external and uncontrolled, e.g., ambient, lighting conditions at wavelengths that a localization sensor (such as a complementary metal oxide semiconductor (CMOS) camera) is sensitive to. This ambient lighting may contaminate the illumination of the environment with light unexpected for the perception system. Due to the unknown nature of the geometry, wavelength, or other properties of the extraneous light, it can be difficult to filter out all permutations of light that may show up in the scene. This in turn, makes it difficult for the system to accurately locate the EVs charging receptacle and position the charging plug.

Aspects of the present disclosure are directed to providing improvements to autonomous charging of electrical vehicles. In particular, aspects of the present disclosure provide an improved vison or perception system for autonomous localization of the charging connector at a charging receptacle of the EV.

In an aspect of the present disclosure, an apparatus for directing a connection element utilizing light filtering in a computer vision system is provided. The apparatus comprises a robotic element for manipulating the connection element and a computer vision system communicatively coupled to the robotic element. The computer vision system comprises one or more processors, and the processors are configured to: receive a first frame representing a target environment at a first time, the target environment at the first time comprising marker light of a first mode and other light; receive a second frame of the target environment at a second time, the target environment at the second time comprising marker light of a second mode and the other light, wherein the marker light of the second mode has at least one property different than the marker light of the first mode; compare the first frame to the second frame to determine a difference in lighting in the target environment between the first time and the second time; and differentiate the marker light of the first mode and the marker light of the second mode from the other light based on the determined difference.

In another aspect of the present disclosure, a method for light filtering in a computer vision system is provided. The method comprises: receiving a first frame representing a target environment at a first time, the target environment at the first time comprising marker light of a first mode and other light; receiving a second frame of the target environment at a second time, the target environment at the second time comprising marker light of a second mode and the other light, wherein the marker light of the second mode has at least one property different than the marker light of the first mode; comparing the first frame to the second frame to determine a difference in lighting in the target environment between the first time and the second time; and differentiating the marker light of the first mode and the marker light of the second mode from the other light based on the determined difference.

In another aspect of the present disclosure, a non-transitory computer-readable medium having processor-executable instructions stored thereon is provided. The processor-executable instructions, when executed by the one or more processors, facilitate: receiving a first frame representing a target environment at a first time, the target environment at the first time comprising marker light of a first mode and other light; receiving a second frame of the target environment at a second time, the target environment at the second time comprising marker light of a second mode and the other light, wherein the marker light of the second mode has at least one property different than the marker light of the first mode; comparing the first frame to the second frame to determine a difference in lighting in the target environment between the first time and the second time; and differentiating the marker light of the first mode and the marker light of the second mode from the other light based on the determined difference.

### BRIEF DESCRIPTION OF THE DRAWINGS

Embodiments of the present disclosure will be described in even greater detail below based on the exemplary figures. The present disclosure is not limited to the exemplary embodiments. All features described and/or illustrated herein can be used alone or combined in different combinations in embodiments of the present disclosure. The features and advantages of various embodiments of the present disclosure will become apparent by reading the following detailed description with reference to the attached drawings which illustrate the following:
Fig. 1 depicts a schematic example environment for autonomous electrical vehicle charging.
Fig. 2 schematically depicts a top-down view of the exemplary electric vehicle environment in accordance with one or more examples of the present disclosure.
Fig. 3 shows a scene including constant light contaminating a vision system in accordance with one or more examples of the present disclosure; and
Fig. 4 shows a scene including modified lighting in accordance with one or more examples of the present disclosure.
Fig. 5 shows an example process for locating an electric vehicle charging component in accordance with one or more examples of the present disclosure.
Fig. 6 is a block diagram of one or more devices or systems within the exemplary environment of Fig. 1.

### DETAILED DESCRIPTION

Aspects of the present disclosure provide automated connection devices (ACDs) and process for operating ACDs for use in efficiently and accurately connecting an EV charger to an EV in order to autonomously charge the EV. Autonomous charging of EVs performed according to the present disclosure provides many advantages. For example, autonomous charging enables a high degree of safety during charging, which, in turn, enables use of high charging power ratings e.g., fast-charging. Additionally, autonomous charging improves operational efficiency in charging fleet vehicles or vehicles at a public charging station and increases customer comfort.

For example, according to an aspect of the present disclosure, an ACD process is provided for precisely determining the location of the charging receptacle on the EV, which aids the connection of a EV charger to an EV. This ACD process can be optimized for minimal processing overhead to function on an embedded platform, to be cost effective (e.g., to avoid or eliminate a dependency on additional vision and perception components), and to maximize invariance (e.g., maximizing the ability of the system reading to remain unchanged regardless of scale, rotation, lighting, noise, etc.). These optimizations and improvements may be achieved through devices, systems, and methods which can filter out contaminating light, giving more refined control without necessarily requiring wavelength filtering and multiple bandpass filters or multiple cameras. Some aspects of the present disclosure also solve a contaminating light issue by considering the light that is changing at a controlled frequency, or only the light that is changing at a controlled frequency.

An ACD process according to a preferred implementation of aspects of the present disclosure (having such advantageous attributes named above) includes transient filtering out of unpredictable light (light contamination) by a computer vision system of the ACD. The transient filtering may include: synchronous matching of the image capture frequency with an illumination system and considering only the delta between images; emitting synchronous lighting directly from source to camera or reflect/refract off objects within the field of view (FOV); and/or identification of individual lighting sources. The synchronous matching of the image capture frequency with the illumination system may be performed with individual channels or wavelengths. For example, a RGB image may be reconstructed from individual channels. For the synchronous lighting, the lighting source may be in or out of the computer vision sensor's (e.g., camera's) FOV. The individual lighting sources may be identified by: using multiple frequencies distinguishing between light sources; using the same frequency, but separate starting times for each light source; and/or the lighting sources identified may be multiples of light sources.

Examples of the presented disclosure will now be described more fully hereinafter with reference to the accompanying figures, in which some, but not all, example implementations of aspects of the present disclosure are shown. Indeed, implementations made according to aspects of the present disclosure may be exemplified in different forms and should not be construed as limited to the examples set forth herein; rather, these examples are provided as an aid to fully understanding the present disclosure. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

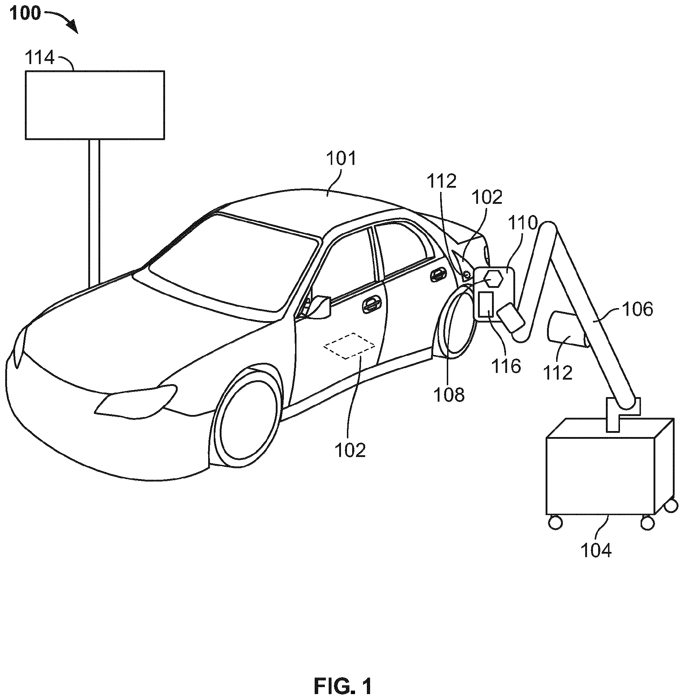

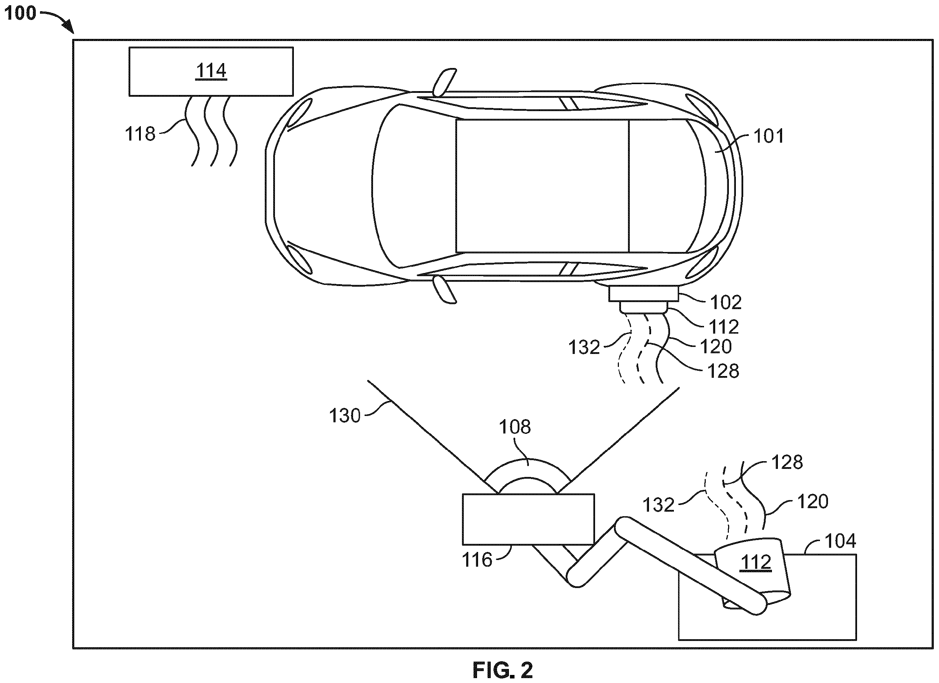

Fig. 1 is a depiction of an autonomous EV charging environment 100. For instance, Fig. 1 depicts an environment similar to what may be seen in a charging station or garage. The environment 100 includes an electric vehicle 101, having a charging component 102 (e.g., a charging receptacle for charging the EV); and a robot 104, having a robot arm 106, a light sensitive receiver 108, and a charging element 110 (e.g., a charger for charging the EV). The light sensitive receiver 108 and the charging element 110 are able to be positioned and manipulated in space, for example, by the robot 104 using the robot arm 106, a control device 116 (such as an ACD), or another entity or component. The environment 100 also includes light sources 112, which may emit light 120 or modified light 128, 132 (shown schematically in Fig. 2), and a background light source 114 (e.g., an illuminated sign, a window, a computer monitor, television), which may emit light 118 (see Fig. 2) that contaminates the vision system of the robot. In some instances, environment 100 may also include additional or further light sources, vehicles, or robots.

The charging component 102 may also be able to engage in wireless communication with the control device 116 or robot 104. The control device 116 or robot 104 can have wireless communication that is complimentary to the charging component 102, and can also have a standardized protocol for communication (e.g., industry standard communication protocol). The wireless communication can allow for initial communications to the robot 104, or to the control device 116 to direct the robot 104, to begin charging, e.g., that the EV 101 is located in a respective position and ready to begin charging. Robot 104 can also communicate back to the EV 101 once it has positioned and localized itself. The wireless communication can also allow for reading and synchronizing what type of change from light 120 to modified light 128, 132 is expected, such as communicating a predetermined modification of light 120 that control device 116 should look for.

While the environment 100 of Fig. 1 may depict and describe the charging component 102 as located on the side of EV 101, it will be appreciated that charging component 102 need not be located on the side of the EV 101. For example, the charging component 102 may be located underneath the EV 101, as an underbody unit, as shown in Fig. 1 in dashed line reflecting this additional or alternative example. The robot 104 can then have a complimentary process for positioning the light sensitive receiver 108 using the robot arm 106 such that light sensitive receiver 108 can receive light from light sources 112. Additionally, or alternatively, robot 104 may be initially positioned in or close to the floor of environment 101. Therefore, if robot 104 were positioned in or close to the floor of environment 101, an underbody unit for a robot 104 can then use mechatronic movement to robustly position robot 104 beneath the charging component 102.

While the environment 100 of Fig. 1 may depict and describe the control device 116 as physically included in robot 104, it will be appreciated that the control device 116 need not be a part of the robot 104. For instance, the control device 116 may be separate from robot 104, but in communication with the light sensitive receiver 108, the charging element 110, the robot 104, or various other components, alone or in combination. The control device 116 may have a direct wireline electrical or analog connection to various components, or may communicate wirelessly via a global area network (GAN) such as the Internet, a wide area network (WAN), a local area network (LAN), or through other options such as Bluetooth. The control device 116 may also be in communication with other components via a combination of wireline and wireless communication within the environment 100.

In operation, the control device 116 may determine the location of charging component 102 and direct the positioning and movement of the charging element 110 (e.g., via the robot 104 or directly to the robot arm 106). For instance, the control device 116 (or robot 104) may sense (via one or more sensors or other interfaces) that the EV has been parked in a charging zone, and may seek to begin charging the EV by connecting the charging element 110 to the charging component 102. The robot 104 may then be directed to couple the charging element 110 to the charging component 102. Such operations may be assisted or advanced by determining the location of the charging component 102. The control device 116 may receive input from the light sensitive receiver 108, and may communicate with the components of environment 100, e.g., robot 104, robot arm 106, to direct the positioning of the charging element 110. It may be also advantageous to move the light sensitive receiver 108 as part of the above process.

The light sources 112 may emit light that is received by the light sensitive receiver 108. Light sources 112 can be an individual light outputting or emitting structure, or a combination of light outputting or emitting structures (e.g., a collection of light emitting diodes (LED), condensed fluorescent light bulbs, incandescent light bulbs, cathodoluminescent lamps). The light sources 112 may also be capable of modifying the light output or emitted by the light source 112 (e.g., light 120). For instance, the light sources 112 may each include a plurality of LEDs of different wavelengths or colors of light, and may selectively utilize the LEDs of a certain wavelength or color, or at timed intervals, alone or together, such that the light source may emit different types of light (e.g., light of different wavelengths), light at different times and durations, and/or light at different intensities. Additionally or alternatively, light sources 112 may include screens, filters, or polarizers that can be selectively applied to the light outputting or emitting structures such to modify the light output or emitted. Advantageously, emissive lighting allows for localization to be more easily performed through dirt or other interference with the charging component 102, for example if the charging component is positioned under the car, by emitting through the dirt, instead of depending on light to be received.

The light sensitive receiver 108 is able to receive light, including light emitted from the light sources 112. While the light sensitive receiver 108 is shown attached to the robot 104 that can manipulate the charging element 110, the light sensitive receiver 108 may also be attached or positioned at other places in environment 100. For example, light sensitive receiver 108 may also be affixed to a wall of environment 100, or an additional or separate stationary or mobile structure in environment 100. The light sensitive receiver 108 may be (or include, but is not limited to) one or more cameras, imaging sensors, bandpass filters, and/or light receptive sensors. The light sensitive receiver 108 may also employ other sensors, such as color sensitive or photoelectric sensors, or portions thereof. The light sensitive receiver 108 may be able to communicate a variety of information to other components, e.g., the control device 116, such as images, bit streams, and transistor outputs, and in multiple formats (e.g., analog or digital).

The computer vision system may be operated by an ACD that is configured to determine the location/orientation of a charging component (e.g., the charging receptacle of an EV) by processing one or more images captured by a light sensitive receiver. The ACD may process the images to determine a location of the charging component based on the detection of one or more markers, and an expected relationship between the markers and a locating/orientation of the charging component. For example, the vision system may expect the charging component to be located at the center of a geometric shape defined by connecting the markers to formed a closed, singular or multi-dimensional shape (e.g., line, a triangle or quadrilateral, a pyramid or prism). This geometric center can then function as a localized landmark that gives info on the location of the charging component. For instance, the EV may have three markers be positioned at points of an imaginary equilateral triangle, with the geometric center being where the charging component is located, and with the triangle oriented with one side parallel with the horizontal (indicating the horizontal alignment of the charging device) and the other two sides intersecting at the top marker (indicating the vertical alignment of the charging device). While the EV may have these three markers, the ACD may have no information on the marker configuration at the EV, and so may generally seek to find a geometric center of detected markers as the location of the charging component. In other words, if there is a known relationship of the location of the charging component to the location of the markers, then the ACD can operate on that known relationship, and if there is a no known relationship, the ACD can determine a location of the charging component based on the markers positioning and/or any other known information, such as an anticipated location of the charging component. The markers may be embodied as light sources. A person of ordinary skill in the art would recognize that the present disclosure is not limited to the above described method for determining a location from markers, and that visual location based on detecting markers may be implemented in a variety of ways. Further, while the markers are described below primarily as light sources, the markers may also be, for example, reflective devices.

Fig. 2 is a top-down schematic view of the target environment 100 of Fig. 1. Directly within the field of view 130 of light sensitive receiver 108 is the car 101, charging component 102, and a marker light, e.g., light source 112, in addition to background light source 114 which is also within the field of view 130 of the light sensitive receiver 108. The light sensitive receiver 108 is the able to receive each mode of light, (e.g., light 120, 128, 132) emitted by light source 112 and light 118 emitted by background light 114. Moreover, it is possible for light sensitive receiver 108 to receive light from a marker light positioned outside of the field of view 130 (e.g., light source 112 on robot 104). For example, connection component 102 may include light redirecting structures (e.g., reflectors, refractors) that provide marker light by allowing light to be redirected at a location of the connection component 102. Moreover, Fig. 2 also shows, schematically, that light sources 112 are capable of producing light that can have varying properties (e.g., light 120, 128, 132), whereas in the example of Fig. 2, background light 114 is emitting background light 118 of substantially similar or constant properties, or at least background light 118 that does not exhibit the same differing properties as the different modes of light 120, 128, 132. While Fig. 2 is shown schematically, those of skill in the art would recognize that one or more components may operate together or separately-for example, the control device 116 may include the light sensitive receiver 108 such that the field of view 130 is both the field of view 130 of the control device and the light sensitive receiver 108.

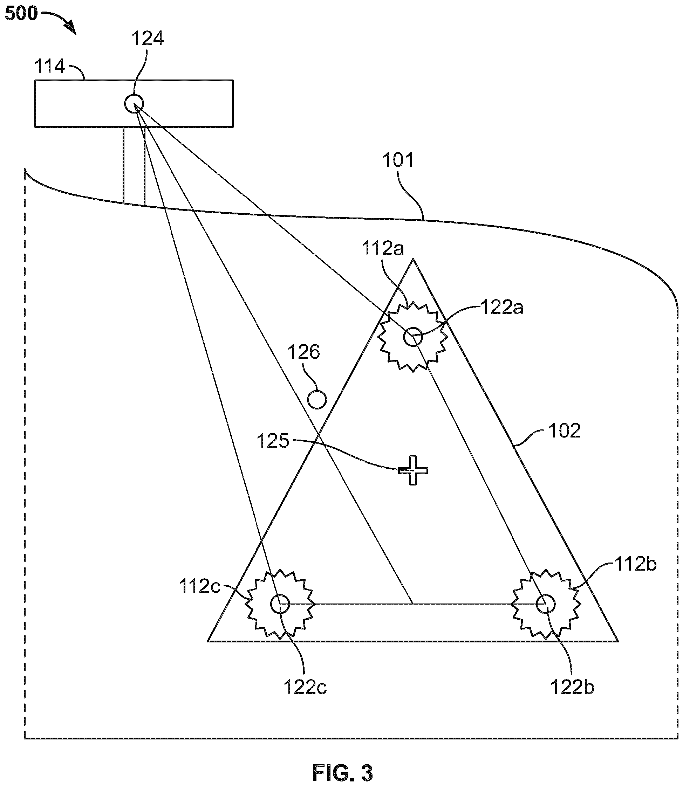

Fig. 3 shows an example of a scene 500 of environment 100 as evaluated by a computer vision system for locating a charging component, e.g., a scene produced by control device 116 based on the input from light sensitive receiver 108. The light sensitive receiver 108 is viewing (e.g., receiving light from) an environment 100, which includes charging component 102 of car 101. The charging component 102 has three marker lights, e.g., light sources 112a, 112b, 112c, each of which are identified by a perception system (e.g., the control device 116 at light identification points 122a, 122b, 122c). Light sources 112a, 112b, 112c are each emitting light in a given mode (e.g., light 120 in Fig. 2), which is received by the light sensitive receiver 108. The environment also include other light sources that are detected by the light sensitive receiver 108. For example, the scene 500 of Fig. 3 also captures a background light source 114 at light identification point 124 emitting light 118 (which could be ambient or constant light). Light 118 caused by background light source 114 may contaminate the light 120 received by the light sensitive receiver 108 in environment 100 (e.g., as light not associated with the location of the charging receptacle 102, but nevertheless potentially not-discriminated therefrom). If the control device 116 (e.g., operating as an ACD or a perception system device) is unable to discriminate the light emitted from light sources 112a, 112b, 112c of the charging component 102 from that emitted from other light sources (e.g., background light source 114), then each identified light source location (e.g., light identification points 122a, 122b, 122c, 124) may be used to determine an expected location 126 of the charging component 102. As a result, and as shown in the example of Fig. 3, the determined location 126 of charging component 102 does not correspond to the precise location 125 of charging component 102.

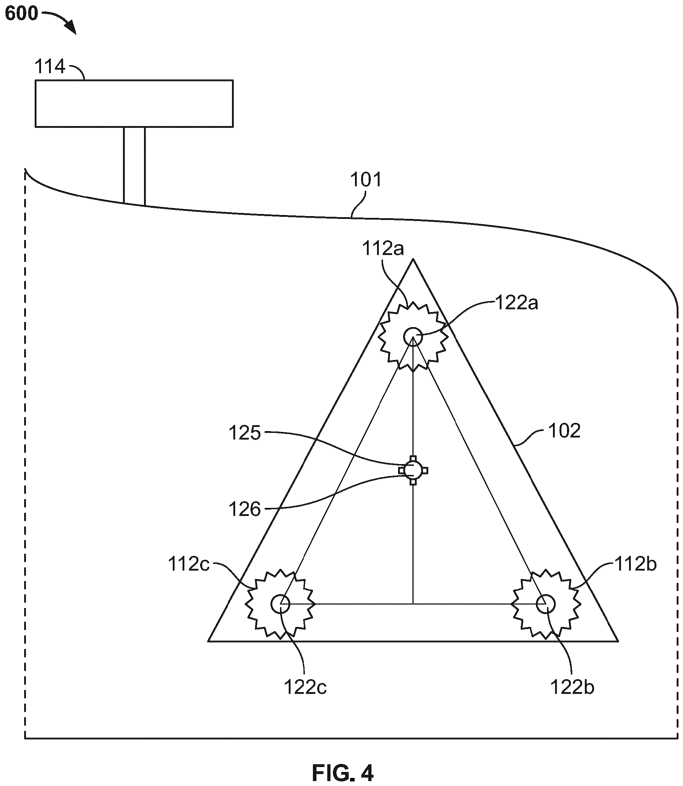

Fig. 4 shows an example of another scene 600 of environment 100. The light sensitive receiver 108 is viewing charging component 102 in environment 100. The marker lights, e.g., light sources 112a, 112b, 112c, are each emitting light in a different mode (e.g., light 128, 132 in Fig. 2), that results from a modification of light 120. For example, the light source 112 itself, refractors, reflectors, or polarizers in environment 100, or lenses, channels, or sensors, alone or in combination, may modify light 120 into light 128. For instance, the control device 116 or the light sensitive receiver 108 may know in advance to look for modified light 128-e.g., by utilizing modified light 128 that is in accord with a predetermined modification of light 120 to identify light 128 as a modified form of light 120 from light source 112-or may determine that light 128 is modified with respect to light 120 of light source 112 by comparison of the captured frames (e.g., image frames). The control device 116 has then excluded from scene 600 light that is not modified between the image frames (e.g., light 118 of light identification point 124) or does not share the same difference between frames, and determined the location 126 of the charging component 102 using only the modified light 128 (which the system can now discriminate as being associated with the location of the charging component 102). Accordingly, the control device 116 is able to determine a location 126 that corresponds to the precise location 125 of the charging component 125. Scene 600 therefore further allows for the control device 116 to create an operating representation of the environment 100 from which the control device 116 can use to make decisions, such as directing movement in the environment 100 based on the determined location 126 of objects in environment 100. In some instances, scene 600 of Fig. 4 may also include a synchronous lighting and image capture (frame rate) which may assist in filter out lighting at any other frequency.

Moreover, in Fig. 4, the light from 3 LEDs of light sources 112a, 112b, 112c may be modified such that the light flashes at a controlled rate matching the controlled frame rate of a camera of light sensitive receiver 108 (or another image capturing method). Control device 116 might then only consider the change in image values between synchronized frames. This may cause the light changing at other frequencies to be discounted as shown between the scenes 500 and 600 of Fig. 3 and Fig. 4, respectively. This synchronization can occur with specific wavelengths, such as specifically red, green, blue, or other channels, and can then reconstruct a color image from the corresponding illumination system.

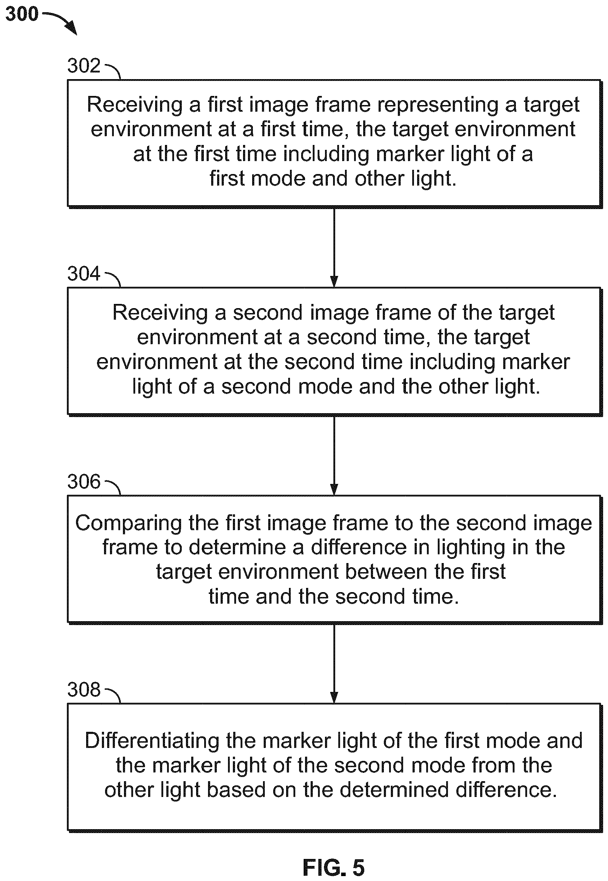

Fig. 5 shows an exemplary process 300 for using an ACD process for autonomous EV charging in accordance with one or more examples of the present disclosure. The process 300 may be performed by the control device 116 of Fig. 1. However, it will be recognized that any of the following blocks may be performed in any suitable order and that the process 300 may be performed in any suitable environment and by any suitable device. For instance, the control device 116 may comprise or be comprised within the light sensitive receiver 108, a robotic element that comprises the light sensitive receiver 108, or be separate from but in communication with the light sensitive receiver 108 or robot 104. The descriptions, illustrations, and processes of Fig. 5 are merely exemplary and the process 300 may use other descriptions, illustrations, and processes for using an ACD process for autonomous EV charging.

At block 302, the control device 116 receives a first image frame representing a target environment 100 at a first time, the target environment at the first time including marker light of a first mode and other light. For example, the control device 116 can receive from a light sensitive receiver 108 light 120 from a marker light, (e.g., light source 112). The light source 112 can be associated with a location of a component of the vehicle (e.g., car 101). The control device 116 may store the first scene in memory (e.g., RAM 208 or storage 210). For example, the light source 112 may be positioned in environment 100 to assist the location of the connection component 102. The light source 112 can be known by the control device 116 to have a specific relationship with the location of the connection component 102, or the control device 116 may identify other features in environment 100 and determine how the light source 112 is associated with the connection component 102. For instance, a light source 112 can be affixed to the connection component 102 as in Figs. 1 and 4-6 and emit light (e.g., light 120, 128, 132) from the position of the connection component 102. Additionally or alternatively, a light source 112 may be positioned behind or above the light sensitive receiver 108 as in Fig. 1 and have light source's 112 light reflected or refracted in a way that provides information on the location of the connection component 102, e.g., by positioning reflectors or refractors on the connection component 102. Additionally, the light in the first image frame need not be visible light. For example, the light from light source 112 may include infrared or ultraviolet light, e.g., light of wavelengths above or below the wavelength range of visible light.

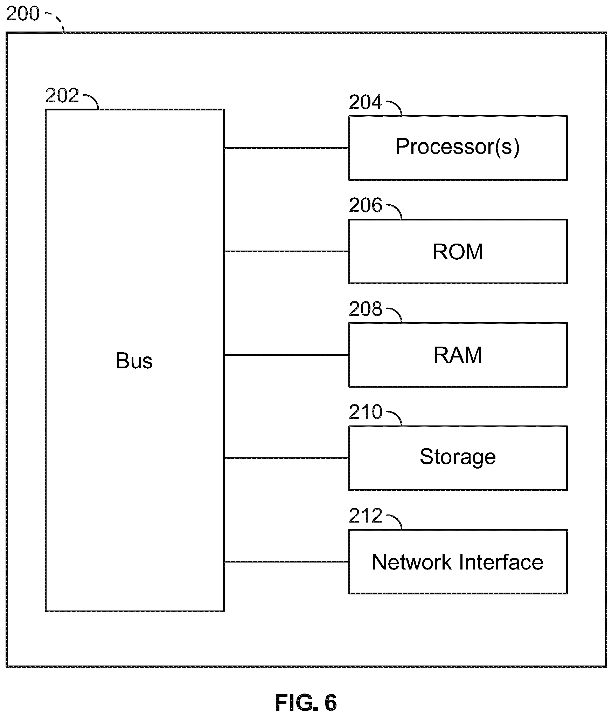

With reference to Figs. 1 and 4, the light source 112 may be within field of view 130 of light sensitive receiver 108 or outside of the field of view 130, and still be associated with a location of the connection component 102. For example, in Figs. 5 and 6 the light source 112 is positioned on or in the connection component 102, the light source 112 is in the field of view 130 of the light sensitive receiver 108, and the light sensitive receiver 108 receives light 120 directly from the light source 112. Additionally or alternatively, the light source 112 may be out of the field of view 130, e.g., positioned above or behind the light sensitive receiver 108, on the robot 104, above the connection element 110, or on a wall or standing structure of environment 100. The light sources 112 may light up the entire, or a portion of, the field of view 130. In some instances, a reflector or refractor associated with the connection component 102 may then reflect or refract the light 120 into the field of view 130 of the light sensitive receiver 108, without needing to substantially adjust how the light 120 is modified or how control device 116 determines the location 126 of the charging component. In an example having reflector or refractors associated with the connection component 102, however, a communication protocol might be forgone as the control device 116 has control over the light source 112.

At block 304, the control device 116 receives a second image frame of the target environment at a second time, the target environment at the second time including marker light of a second mode and the other light. For instance, control device 116 can receive, from the light sensitive receiver 108, an image frame of the environment at a second time (e.g., sometime after the first image frame) including a modified light 128 from the light source 112. For example, the light 128 from the light source 112 (e.g., light emitted by light source 112 or light from light source 112 that is redirected off of a surface towards the light sensitive receiver 108) may be a modification of the light 120, also from the light source 112. A light source 112 may also delay outputting or emitting certain light 120, or outputting or emitting subsets of light within light source 112 (e.g., light sources 112a, 112b, 112c) such that the time in which light is emitted by light source 120 varies with respect to a time period of the light sensing receiver's 108 functioning, e.g., a frame rate of a camera of light sensing receiver 108.

For example, a modification by light source 112 that causes light 120 to become modified light 128 may be flashing at a flashing rate. Light source 120 may lower and raise the intensity of the light 120, including turning off and back on light source 120, such that light 120 is modified into a flashing pattern, and becomes flashing light 128. The rate of flashing may be controlled with respect to the light sensitive receiver 108 (e.g., matched to the frame rate of a camera, or coordinated with the frame rate of the camera such that light appears in some frames but not others) or it may flash at any standard, fixed, or non-fixed interval. In some instances, the flashing rate is predetermined and known by the control device 116, such that flickering or fluctuations in intensity of the background lights (e.g., a light 118) may not interrupt the process.

For instance, a modification by light source 112 that causes light 120 to become modified light 128 may also be a change in wavelength of the light 120 to the wavelength of the light 128. In some instances where the wavelengths are in the visible range, the control device 116 may receive, from light sensitive receiver 108, scenes with light 120 that begins as a first color and is modified into light 128 as a second color, e.g., a red green blue (RGB) light emission. Additionally or alternatively, the wavelength of light 120 may be modified from a non-visible wavelength of light (non-visible by the human eye) to another non-visible wavelength of light 128 (e.g., infrared to ultraviolet, or from visible light 120 to non-visible light 128 or vice-versa). Further, a modification by light source 112 that causes light 120 to become modified light 128 may also be a polarization of light 120. Light 120 may be polarized from non-polarized light 120 to polarized light 128, or may change a direction of polarization of the light.

For example, a modification by light source 112 that causes light 120 to become modified light 128 may also be the use of different lights within light source 112. For example, light source 112 may include a number of lights (e.g., any of light sources 112a, 112b, 112c). Light sensing receiver 108 may receive light (e.g., light 120, 128, 132) from each of light sources 112a, 112b, 112c in different captured image frames, resulting in different scenes (e.g., scene 500 and 600). Additionally, or alternatively, light sources 112a, 112b, 112c may each emit light with different features (e.g., different wavelengths, polarizations, or flash rates). The light 120 received by light sensing receiver 108 may then very from scene to scene depending on the timing and duration of the features of each light source 112a, 112b, 112c. Moreover, light sources 112a, 112b, 112c may cycle through different wavelengths of light (e.g., an RGB cycle). Additionally or alternatively, light sensing receiver 108 may receive light 128 from a light source 112 outside of the field of view 130 of light sensing receiver 108 as a form of modified light 128, either alone as a replacement for another light source 112 or in conjunction with another light source 112.

Light source 112 or control device 116 may also modify light 120 at specific time intervals, duration, or frequencies. For example, light 120 may be modified into light 128 at a rate that matches the frame rate of a camera of the light sensing receiver 108, or may be modified at a set time interval (e.g., blinking rate or intensity duration). The control device 116 or light sensing receiver 108 may know the predetermined modification before the modification occurs and adjust to accommodate the receipt of light 120, 128, 132 according to the modification.

Additionally, there may be more than one synchronous frequency or image capture starting time. This would allow specific lights (e.g., light sources 112a, 112b, 112c) to be distinguished. In the example of Fig. 4, each of the LEDs of light sources 112a, 112b, 112c may be at a different frequency or a different starting time which may allow for only the change between frames to highlight a single LED (or any arbitrary portion of lighting sources). For example, a time stamp may be provided for a first scene, and later scenes may be compared with respect to features timestamped in the first scene. This may provide more refined control without needing to rely on wavelength filtering, multiple bandpass filters, or multiple cameras. As mentioned earlier, the lighting sources may be positioned elsewhere so that their light (e.g., light 120, 128, 132) reflects or refracts off objects before reaching the light sensitive receiver 108.

A modification that causes light 120 to become modified light 128 may also be a change in the light 120 that activates different components of light sensitive receiver 108, e.g., utilizes different channels, cameras, sensors. In some instances, different wavelengths of light may activate different components (e.g., an infrared sensor, an ultraviolet sensor, color specific channels). In some examples, other modifications of light 120 may be keyed to features of the light sensing receiver 108 (e.g., different light sources 112 or different light flashing speeds matching different cameras with different frame rates). Control device 116 may also be the cause of light 120 becoming modified light 128 in some instances, e.g., by applying a lens to the light sensing receiver 108 that selectively alters certain wavelengths, intensities, or polarities of light.

At block 306, the control device 116 compares the first image frame to the second image frame to determine a difference in lighting in the target environment 100 between the first time and the second time. For example, the control device 116 can determine the location 126 of the component 102 by utilizing a comparison of the first image frame and the second image frame. The control device 116 may utilize the modification of light 120 into light 128 when comparing the images, as shown by scenes 500 and 600 to determine the location 126 of the component 102.

The control device 116 may perform the comparison of the first image frame and the second image frame using various processes. For example, control device 116 may deploy its own process for comparing images which, overtime, allows for nuanced comparison of the differences between images. Control device 116 may also match the pixels of an image received from light sensing receiver 108 or produced by the control device 116 as a result of the information received from light sensing receiver 108. Many different types of pixel matching may be used (e.g., area based matching techniques and feature based matching techniques). For instance, control device 116 may receive, produce, or process an image of scene 500 composed of pixels, and may map which pixels include what information, e.g., a type of light 120 or a shape of a light source 112, or which pixels include what information with respect to other pixels in the image of scene 500, e.g., which pixels define the boundary of a light source 112 or which pixels define a boundary of light 120 with less intensity than the light source 112. Control device 116 may then receive, produce, or process an image of scene 600, and perform similar pixel processing as performed on the image of scene 500. Control device 116 may match, correlate, or compare the pixels sharing various features to identify these pixels as the same light source 112. Additionally or alternatively, control device 116 may determine that while the received light may have changed, the light source 112 is the same light source 112, and may then determine that light 128 in scene 600 is from light source 112 of the image of scene 500. Additionally or alternatively, control device 116 may compare features of received digital or analog signals (e.g., time variance, intensity, periodicity) from light sensitive receiver 108 from the two image frames or the positioning perceived by light sensing receiver 108 from the two image frames, and correlate them. Control device 116 may utilize the identified light sources 112 to direct positioning in space using various process of image based autonomous navigation (e.g., 3D point estimation from epipolar constraints, or triangulation via direct linear transformation estimation).

At block 308, the control device 116 differentiates the marker light of the first mode and the marker light of the second mode from the other light based on the determined difference. For example, the control device 116 may utilize a predetermined flashing rate (e.g., a flashing rate stored in memory and retrieved for comparison) to compare the first image frame and the second image frame. The control device 116 may determine that because light source 112a, 112b, 112c flashed at the predetermined flashing rate as modified light 128, while light 118 did not flash at a predetermined flashing rate, light 118 (present in scene 500) may be excluded from the determination of the location 126 of the component 102 (as in scene 600). The use of a predetermined modification to compare image frames may also include the use of other modifications (e.g., wavelength, initial starting time).

Additionally or alternatively, control device 116 may compare the first image frame and the second image frame and determine a modification of light 120 into light 128 based on this comparison. For instance, control device 116 may determine the modification of light that occurs between image frames of scene 500 and scene 600, and determine that because those light sources are modified (e.g., light sources 112a, 112b, 112c) those light sources should be considered. For example, control device 116 may compare the first image frame and the second image frame and determine that light 120 from light sources 112a, 112b, 112c underwent a modification, while light 118 from light source 114 did not undergo a modification, or the same type of modification as light 120. Based on that determination, control device 116 may consider the light sources 112a, 112b, 112c when determining the location 126 of the component 102.

Additionally or alternatively, the control device 116 may be able to engage in wireless communication with the charging component 102, such that the charging component 102 can communicate to the control device 116 how the light 120 will be modified. This can allow for fine tuning of LED frequencies and dynamic adjustment with wireless communication.

Control device 116 may determine the location 126 of the component 102 by utilizing a comparison of the first image frame and the second or further image frames where the comparison utilizes a construction of an RGB image. For example, control device 116 may receive from light sensing receiver 108 images of scenes which include light sources 112a, 112b, and 112c having light 120 modified between RGB wavelengths into modified light 128, 132. Control device 116 may then construct a composite image from the image frames received from light sensing receiver 108 that uses the red, green, and blue wavelengths of light, received individually, to form the composite image. For example, a first image frame can be only R, a second image frame can be only G, and a third image frame can be only B, or anything else that had all three RGB over the course of all frames, and those received frames can form the basis of the comparison. If redundancy is desired, a set number of R, G, and B frames, offset or in some pattern, can be used. Advantageously, even though some R LEDs may get obstructed, if there is synchronization at the R frames, it can be identified that the charging component is missing LEDs, while so long as enough of the G channel LEDs are functional, however, localization can still performed as needed. This can also be extended to multiple patterns (e.g., frequencies, sets of LEDs). For example, 3 LEDs my emit light at 60 frames per second (fps), and another LED at 45 fps. A change between images can be constantly calculated between both pairs based on input images, so long as the relevant frames are captured and used.

The control device 116 can send a control signal based on the determined location 126 of the component. The control signal assists the positioning of the electrical element 110. For example, the control device 116 can determine that the location 126 of the component is in a certain location in the environment 100 based on scene 600, and direct the robot 104 or the robot arm 106 to move within the space of environment 100 as necessary to connect or position the electrical element 110 (e.g., with respect to the electrical component 102). Moreover, control device 116 may send a control signal to another entity which then directly or indirectly manages the movement or positioning of electrical element 110. Control device 116 may also send a control signal which is used in combination with other positioning information or processes to position the electrical element 110.

Additionally, control device 116 may optionally receive, from the light sensitive receiver 108, a third or further number of image frames comprising a light 132 that is modified from light 128. Control device 116 may then determine the location 126 of the component 102 by utilizing a comparison of the first image frame, the second image frame, and the third or further number of image frames in any suitable way as discussed above. Modified light 132 may have identical features to light 120, i.e., light 128 may be modified to return to the features of light 120. For example, light 132 may represent an alternation between two states of light (e.g., a cycle of light 120 and light 128). Additionally or alternatively, light 132 may differ from both light 120 and light 128, e.g., light 120 from light source 112 may be red, then light 128 from light source 112 may be green, the light 132 from light source 112 may be blue.

Instances of the present disclosure can have multiple implementations. For example, some instances can be implemented as a method of transiently filtering out unpredictable lighting in computer vision systems. These instances can includes synchronous matching of the image capture frequency with an illumination system and a consideration of only the delta between images. For example, this may be performed with individual channels or wavelengths, where a reconstruction of an RGB image from individual channels may occur. These instances can also include synchronous lighting that may emit directly from source to camera or reflect/refract off objects within the FOV, and where the lighting source may be in or out of the camera's FOV. These instances can also include individual lighting sources that can be identified, where multiple frequencies may distinguish between light sources, where the lighting sources identified may be multiples of light sources, or the same frequency but separate starting times may distinguish between light sources, or . For instance, for a camera operating at 60 fps, an LED which begins emitting at frame 1, and another LED which begins emitting at frame 10, the comparison can be performed similarly to the comparison performed for flashing lights, where specific frames or series of frames are compared to determine when the LED is or is not present. Moreover, when the starting times are different, high sampling is beneficial to ensure that the frames when the other LED is not emitting are captured.

Fig. 6 is a block diagram of an exemplary control system 200, which may be used to implement a controller-such as the control device 116-within the environment 100. The system 200 includes at least one processor 204 which may be implemented as at least one central processing unit (CPU) or controller (e.g., application-specific integrated circuit (ASIC)), logic (e.g., a field-programmable gate array (FPGA)), that are configured to perform the functions, processes, and/or methods described herein. In some examples, computer executable instructions are used to configure the processor 204, such instructions may be stored and accessed from a non-transitory computer readable medium, such as a local storage 210, which may be a hard drive or flash drive. Read Only Memory (ROM) 206 may include computer executable instructions for initializing the processor 204, while the random-access memory (RAM) 208 can be the main memory for loading and processing instructions executed by the processor 204. The network interface 212 may connect to a wired network, cellular network, local area network, and/or wide area network (e.g., a network of environment 100). The system 200 may also include a bus 202 that connects the processor 204, ROM 206, RAM 208, storage 210, and/or the network interface 212. The components within the system 200 may use the bus 202 to communicate with each other. The components within the system 200 are merely exemplary and might not be inclusive of every component, server, device, computing platform, and/or computing apparatus within the system 200. Additionally, and/or alternatively, the system 200 may further include components that might not be included within every entity of environment 100.

According to one aspect of the present disclosure, for instance, an apparatus for directing a connection element utilizing light filtering in a computer vision system is provided. The apparatus comprises a robotic element for manipulating the connection element and a computer vision system communicatively coupled to the robotic element. The computer vision system comprises one or more processors, and the processors are configured to: receive a first frame representing a target environment at a first time, the target environment at the first time comprising marker light of a first mode and other light; receive a second frame of the target environment at a second time, the target environment at the second time comprising marker light of a second mode and the other light, wherein the marker light of the second mode has at least one property different than the marker light of the first mode; compare the first frame to the second frame to determine a difference in lighting in the target environment between the first time and the second time; and differentiate the marker light of the first mode and the marker light of the second mode from the other light based on the determined difference.

Examples may include one of the following features, or any combination thereof. For instance, in some examples of the apparatus the processors are further configured to send a control signal to the robotic element based on the differentiated marker light of the first mode and the marker light of the second mode from the other light, and the robotic element manipulates the connection element based on the control signal.

In some variations, for example, the marker light of the first mode and the marker light of the second mode correspond to controlled light directly emitted from at least one vision system light source, or the controlled light emitted from the at least one visions system light source after being reflected or refracted by at least one marker optical device, at the first time and the second time, respectively.

In some variations, for instance, the computer vision system comprises a light sensitive receiver having an image capture frequency and configured to capture the target environment in a plurality of frames according to the image capture frequency, the frames comprising the first frame and the second frame. The processors are further configured to operate the at least one vision system light source synchronously with the light sensitive receiver to: emit, by the at least one vision system light source, the controlled light with a first property during the first time to generate the marker light of the first mode; capture, by the light sensitive receiver, the first frame during the first time when the controlled light has the first property; emit, by the at least one vision system light source, the controlled light with a second property during the second time to generate the marker light of the second mode; and capture, by the light sensitive receiver, the second frame during the second time when the controlled light has the second property.

In some variations, for example, the processors are configured to: identify at least one marker location within the target environment as corresponding to a location associated with a source of the marker light of the first mode and the marker light of the second mode based on the determined difference.

In some variations, for instance, differentiating the marker light of the first mode and the marker light of the second mode from the other light comprises: determining that the marker light of the second mode differs from the marker light of the first mode based on a predetermined difference between the second mode and the first mode.

In some variations, for example, the second time is a controlled time interval after the first time.

In some variations, for instance, receiving the first frame and the second frame comprises capturing the marker light in the first mode and the marker light in the second mode using a camera, and the controlled time interval corresponds to a frame rate of the camera.

In some variations, for example, the marker light of the second mode differs from the marker light of the first mode based on at least one of the following features: intensity, wavelength, color, or initial emission time.

In some variations, for instance, receiving the first frame comprises utilizing a first receiver for receiving the first frame representing the target environment at the first time, and receiving the second frame comprises utilizing a second receiver for receiving the second frame representing the target environment at the second time.

In some variations, for example, the marker light of the first mode differs in wavelength from the marker light of the second mode, and differentiating the marker light of a first mode and the marker light of the second mode from the other light comprises: constructing a composite image from the first receiver and the second receiver resulting in a composite marker light; and determining the difference between the composite marker light and the other light from the composite image.

In some variations, for instance, the processors are configured to: exclude the other light from an operating representation of the target environment based on the determined difference of the marker light of the first mode and the marker light of the second mode from the other light.

In some variations, for example, the processors are configured to: store the first frame in a memory accessible to the processors; and retrieve the first frame from the memory for the comparison of the first frame to the second image frame.

In another aspect, a method for light filtering in a computer vision system is provided. The method comprises: receiving a first frame representing a target environment at a first time, the target environment at the first time comprising marker light of a first mode and other light; receiving a second frame of the target environment at a second time, the target environment at the second time comprising marker light of a second mode and the other light, wherein the marker light of the second mode has at least one property different than the marker light of the first mode; comparing the first frame to the second frame to determine a difference in lighting in the target environment between the first time and the second time; and differentiating the marker light of the first mode and the marker light of the second mode from the other light based on the determined difference.

In another aspect, a non-transitory computer-readable medium having processor-executable instructions stored thereon is provided. The processor-executable instructions, when executed by the one or more processors, facilitate: receiving a first frame representing a target environment at a first time, the target environment at the first time comprising marker light of a first mode and other light; receiving a second frame of the target environment at a second time, the target environment at the second time comprising marker light of a second mode and the other light, wherein the marker light of the second mode has at least one property different than the marker light of the first mode; comparing the first frame to the second frame to determine a difference in lighting in the target environment between the first time and the second time; and differentiating the marker light of the first mode and the marker light of the second mode from the other light based on the determined difference.

All examples and features mentioned above may be combined in any technically possible way.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An apparatus for directing a connection element utilizing light filtering in a computer vision system, the apparatus comprising:
a robotic element for manipulating the connection element; and
a computer vision system communicatively coupled to the robotic element, the computer vision system comprising one or more processors, the processors being configured to:
receive a first frame representing a target environment at a first time, the target environment at the first time comprising marker light of a first mode and other light;
receive a second frame of the target environment at a second time, the target environment at the second time comprising marker light of a second mode and the other light, wherein the marker light of the second mode has at least one property different than the marker light of the first mode;
compare the first frame to the second frame to determine a difference in lighting in the target environment between the first time and the second time; and
differentiate the marker light of the first mode and the marker light of the second mode from the other light based on the determined difference.

2. The apparatus of claim 1, wherein the processors are further configured to send a control signal to the robotic element based on the differentiated marker light of the first mode and the marker light of the second mode from the other light, and
wherein the robotic element manipulates the connection element based on the control signal.

3. The apparatus of claim 1 or 2, wherein the marker light of the first mode and the marker light of the second mode correspond to controlled light directly emitted from at least one vision system light source, or the controlled light emitted from the at least one visions system light source after being reflected or refracted by at least one marker optical device, at the first time and the second time, respectively.

4. The apparatus of claim 3, wherein the computer vision system comprises a light sensitive receiver having an image capture frequency and configured to capture the target environment in a plurality of frames according to the image capture frequency, the frames comprising the first frame and the second frame,
wherein the processors are further configured to operate the at least one vision system light source synchronously with the light sensitive receiver to:
emit, by the at least one vision system light source, the controlled light with a first property during the first time to generate the marker light of the first mode;
capture, by the light sensitive receiver, the first frame during the first time when the controlled light has the first property;
emit, by the at least one vision system light source, the controlled light with a second property during the second time to generate the marker light of the second mode; and
capture, by the light sensitive receiver, the second frame during the second time when the controlled light has the second property.

5. The apparatus of any one of the preceding claims, wherein the processors are configured to:
identify at least one marker location within the target environment as corresponding to a location associated with a source of the marker light of the first mode and the marker light of the second mode based on the determined difference.

6. The apparatus of any one of the preceding claims, wherein differentiating the marker light of the first mode and the marker light of the second mode from the other light comprises:
determining that the marker light of the second mode differs from the marker light of the first mode based on a predetermined difference between the second mode and the first mode.

7. The apparatus of any one of the preceding claims, wherein the second time is a controlled time interval after the first time.

8. The apparatus of claim 7, wherein receiving the first frame and the second frame comprises capturing the marker light in the first mode and the marker light in the second mode using a camera, and
wherein the controlled time interval corresponds to a frame rate of the camera.

9. The apparatus of any one of the preceding claims, wherein the marker light of the second mode differs from the marker light of the first mode based on at least one of the following features:
intensity, wavelength, color, or initial emission time.

10. The apparatus of any one of the preceding claims, wherein receiving the first frame comprises utilizing a first receiver for receiving the first frame representing the target environment at the first time, and receiving the second frame comprises utilizing a second receiver for receiving the second frame representing the target environment at the second time.

11. The apparatus of claim 10, wherein the marker light of the first mode differs in wavelength from the marker light of the second mode, and differentiating the marker light of a first mode and the marker light of the second mode from the other light comprises:
constructing a composite image from the first receiver and the second receiver resulting in a composite marker light; and
determining the difference between the composite marker light and the other light from the composite image.

12. The apparatus of any one of the preceding claims, wherein the processors are configured to:
exclude the other light from an operating representation of the target environment based on the determined difference of the marker light of the first mode and the marker light of the second mode from the other light.

13. The apparatus of any one of the preceding claims, wherein the processors are configured to:
store the first frame in a memory accessible to the processors; and
retrieve the first frame from the memory for the comparison of the first frame to the second image frame.

14. A method for light filtering in a computer vision system, the method comprising:
receiving a first frame representing a target environment at a first time, the target environment at the first time comprising marker light of a first mode and other light;
receiving a second frame of the target environment at a second time, the target environment at the second time comprising marker light of a second mode and the other light, wherein the marker light of the second mode has at least one property different than the marker light of the first mode;
comparing the first frame to the second frame to determine a difference in lighting in the target environment between the first time and the second time; and
differentiating the marker light of the first mode and the marker light of the second mode from the other light based on the determined difference.

15. A non-transitory computer-readable medium having processor-executable instructions stored thereon, wherein the processor-executable instructions, when executed by the one or more processors, facilitate:
receiving a first frame representing a target environment at a first time, the target environment at the first time comprising marker light of a first mode and other light;
receiving a second frame of the target environment at a second time, the target environment at the second time comprising marker light of a second mode and the other light, wherein the marker light of the second mode has at least one property different than the marker light of the first mode;
comparing the first frame to the second frame to determine a difference in lighting in the target environment between the first time and the second time; and
differentiating the marker light of the first mode and the marker light of the second mode from the other light based on the determined difference.
